# FASCICULE DE BREVET EUROPEEN

(11) **EP 2 622 287 B1**
(45) Date de publication et mention de la délivrance du brevet: **21.05.2014**
(21) Numéro de dépôt: 11773077.0
(22) Date de dépôt: 14.09.2011
(51) Int. Cl.: F25B 17/08, F25B 39/02

(54) **SYSTEME DE REFRIGERATION PAR ADSORPTION**
ADSORPTIONSKÜHLSYSTEM
ADSORPTION REFRIGERATION SYSTEM

(30) Priorité: 27.09.2010 FR 1057761
(43) Date de publication de la demande: 07.08.2013
(73) Titulaire: Gaz Transport et Technigaz, 78470 Saint-Rémy-Lès-Chevreuse (FR)
(72) Inventeur: LOMBARD, Fabrice, F-78190 Trappes (FR); GOURMELEN, Pierre, F-29870 Landeda (FR); BLAIZAT, Claude, F-60000 Beauvais (FR); DHELLEMMES, Jacques, F-78000 Versailles (FR)
(74) Mandataire: Loyer & Abello
(86) Numéro de dépôt international: PCT/FR2011/052093
(87) Numéro de publication internationale: WO 2012/042144

(56) Documents cités:
- EP-A1- 0 702 199
- WO-A1-01/18462
- WO-A1-2005/108880
- CH-A- 303 791
- DE-A1- 10 001 112
- FR-A1- 2 723 437
- US-A- 3 332 469
- US-A- 4 703 629
- US-A1- 2008 149 311

## Description

L'invention se rapporte au domaine des procédés et des systèmes de réfrigération par adsorption.

Dans les procédés de réfrigération par adsorption, on utilise un phénomène d'adsorption d'une phase vapeur dans un matériau adsorbant en tant que pompage qui abaisse la pression partielle d'un fluide frigorifique dans une enceinte d'évaporation et déplace ainsi l'équilibre de phases de manière à entretenir l'évaporation du fluide frigorifique, ce qui refroidit l'évaporateur par extraction de chaleur latente d'évaporation. Ce pompage est obtenu de manière physico-chimique sans fourniture de travail mécanique. De ce fait, ces procédés permettent d'atteindre des rendements énergétiques avantageux et sont aptes à produire du froid à forte puissance. WO-A-2004/111556 décrit des installations de réfrigération par adsorption multi-étagées qui permettent d'obtenir un large choix de températures finales, notamment des températures très basses. US-A-4703629 divulgue un système de réfrigération selon le préambule de la revendication 1.

Dans un mode de réalisation, l'invention fournit un système de réfrigération comportant :
une enceinte d'évaporation, un produit frigorigène,
un dispositif d'injection pour introduire un produit frigorigène en phase liquide sous la forme d'un jet atomisé dans ladite enceinte d'évaporation,
un dispositif d'adsorption reliée à l'enceinte d'évaporation et comportant un adsorbant susceptible d'adsorber le produit frigorigène en phase vapeur, ledit dispositif d'adsorption étant apte à générer une dépression dans l'enceinte d'évaporation pour abaisser la température du produit frigorigène dans l'enceinte d'évaporation en dessous du point triple du produit frigorigène,
un échangeur de chaleur disposé dans l'enceinte d'évaporation pour réaliser un échange de chaleur entre le produit frigorigène dans l'enceinte d'évaporation et un fluide dans l'échangeur de chaleur,
caractérisé par le fait que l'échangeur de chaleur comporte une surface extérieure d'échange disposée de manière à intercepter sensiblement tout le jet atomisée de produit frigorigène et une surface intérieure délimitant un circuit de fluide agencé de manière à réaliser un échange de chaleur efficace entre le fluide et sensiblement toute l'étendue de la surface extérieure d'échange, de sorte que le produit frigorigène puisse être évaporé sans accumuler une fraction solide du produit frigorigène sur ladite surface extérieure d'échange au cours de l'introduction du produit frigorigène dans l'enceinte d'évaporation.

Selon des modes de réalisation particuliers, un tel système peut présenter notamment une ou plusieurs des caractéristiques suivantes :
- la surface extérieure d'échange est disposée perpendiculairement au jet liquide atomisé ou sous une faible incidence. Une telle disposition permet de maximiser la dispersion du produit frigorigène sur la surface d'échange.
- la surface extérieure d'échange s'étend sensiblement verticalement. Une telle disposition favorise l'évacuation par gravité d'un éventuel dépôt de produit en phase solide sur la surface d'échange. En outre, pour faciliter l'évacuation de cette phase solide qui se serait formée et adhérerait sur la surface d'échange, on peut prévoir un dispositif vibreur apte à propager des vibrations ou des chocs dans l'échangeur afin d'aider la phase solide à se décrocher et à tomber par gravité dans une zone adaptée et permettant son exploitation.
- le circuit de fluide de l'échangeur de chaleur comporte une pluralité de tuyaux ou de canaux parallèles disposés côte à côte le long de la surface d'échange. Un tel arrangement permet de réaliser un écoulement de fluide bien contrôlé quant à son volume et sa vitesse dans l'échangeur de chaleur. Il permet aussi de favoriser l'uniformité et l'efficacité de l'échange thermique le long de toute la surface d'échange. Selon des modes de réalisation, la liaison fluide entre les tuyaux ou canaux peut être en série ou en parallèle.
- la surface extérieure d'échange est continue ou sensiblement continue.
- l'échangeur de chaleur comporte un corps unitaire profilé présentant une pluralité de canaux internes parallèles. Ce corps unitaire comporte par exemple un profilé métallique extrudé.
- ladite ou chaque surface extérieure d'échange présente un état de surface favorisant la mouillabilité de ladite surface.
- l'échangeur de chaleur présente deux surfaces extérieures d'échange disposées de part et d'autre du circuit de fluide. Un tel agencement permet d'accroître l'échange thermique avec le fluide.
- le dispositif d'injection présente au moins deux injecteurs disposés de manière que chacune desdites surfaces extérieures d'échange intercepte au moins un jet atomisé de produit frigorigène. En variante, il est aussi possible de ne pulvériser le produit que sur l'une des deux surfaces extérieures d'échange.
- l'échangeur de chaleur peut présenter différentes géométries, par exemple une forme de plaque ou de tube. Dans un mode de réalisation, l'échangeur de chaleur présente une forme d'enveloppe tubulaire ouverte à ses extrémités et comporte une surface extérieure d'échange située à l'intérieur du tube.
- des moyens de contrôler de flux sont prévus pour contrôler au moins un flux sélectionné dans le groupe consistant en le flux du produit frigorigène introduit dans l'enceinte d'évaporation, le flux du produit frigorigène adsorbé par le dispositif d'adsorption et le flux du fluide circulant dans l'échangeur de chaleur.
- l'adsorbant peut comporter une zéolithe. La zéolithe est un corps adsorbant qui a le pouvoir de fixer de nombreux produits et qui est disponible à faible coût.
- le produit frigorigène peut comporter de l'eau, de préférence déminéralisée ou distillée. Par exemple, l'eau peut être utilisée pour obtenir une température sélectionnée dans la plage entre 0°C et -40°C dans l'enceinte d'évaporation. De nombreux autres corps peuvent être utilisés comme produit frigorigène, selon les températures devant être générées, par exemple éthylène, ammoniac et autres produits mentionnés dans WO-A-2004/111556.
- le dispositif d'injection est apte à atomiser le produit frigorigène en particules de diamètre inférieur à 100 microns, de préférence en particules de diamètre inférieur à 50 microns, et plus particulièrement de préférence en particules d'environ 10 microns, grâce à des injecteurs adaptés à fournir une fine pulvérisation.- un dispositif de récupération est agencé en dessous de l'échangeur de chaleur et apte à collecter des morceaux de phase solide du produit frigorigène tombant de l'échangeur de chaleur, ce dispositif pouvant comporter un deuxième échangeur de chaleur.

L'invention fournit également un procédé de réfrigération comportant les étapes consistant à :
introduire un produit frigorigène en phase liquide sous la forme d'un jet atomisé dans une enceinte d'évaporation,
abaisser la température du produit frigorigène dans ladite enceinte d'évaporation en dessous du point triple du produit frigorigène par mise en communication de ladite enceinte d'évaporation avec un adsorbant susceptible d'adsorber le produit frigorigène en phase vapeur,
réaliser un échange de chaleur entre le produit frigorigène dans ladite enceinte d'évaporation et un fluide dans un échangeur de chaleur disposé dans l'enceinte d'évaporation, l'échangeur de chaleur comportant une surface extérieure d'échange disposée de manière à intercepter sensiblement tout le jet atomisée de produit frigorigène et une surface intérieure délimitant un circuit de fluide agencé de manière à réaliser un échange de chaleur efficace entre le fluide et sensiblement toute l'étendue de la surface extérieure d'échange, et
évaporer le produit frigorigène introduit dans l'enceinte d'évaporation sans accumuler une fraction solide du produit frigorigène sur ladite surface extérieure d'échange au cours de l'introduction du produit frigorigène dans l'enceinte d'évaporation.

Dans un mode de réalisation préféré, on évapore sensiblement tout le produit frigorigène à mesure de l'introduction du produit frigorigène dans l'enceinte d'évaporation. Un tel fonctionnement maximise le flux énergétique utile du procédé de réfrigération. En effet. Lorsque le fluide est évaporé, la puissance frigorifique est développée et transmise au fluide à refroidir. Si le produit frigorigène se transforme en glace, une fraction de la puissance frigorifique est stockée dans l'enceinte d'évaporation, ce qui n'est pas désirable. Toutefois, le dépôt d'une quantité limitée de produit en phase solide sur des surfaces de l'enceinte d'évaporation est acceptable tant qu'il n'altère pas significativement l'injection du produit et/ou l'efficacité de l'échangeur de chaleur.

De préférence, l'échange de chaleur abaisse la température du fluide dans l'échangeur de chaleur en dessous dudit point triple du produit frigorigène.

Ce procédé peut notamment être mis en oeuvre à l'aide du système de réfrigération précité.

Certains aspects de l'invention partent du constat que le produit frigorigène tend nécessairement à se solidifier lorsqu'il est refroidi à une température inférieure à son point triple. Une gouttelette liquide refroidie subitement peut se maintenir temporairement dans un état de surfusion dans certaines conditions. Toutefois, l'état de surfusion est instable et aboutit à une transition immédiate vers l'état solide lorsque la surface de la gouttelette est perturbée, notamment par un choc. Lorsque les conditions de température et de pression dans l'enceinte d'évaporation sont maintenues en dessous du point triple du produit frigorigène, il existe donc un risque élevé qu'une fraction du produit frigorigène se dépose à l'état solide sur les surfaces qu'il rencontre. Si un tel dépôt se forme sur la surface d'échange de l'échangeur de chaleur, la faible conductivité thermique de la couche solide ainsi formée et le mauvais contact thermique entre deux solides réduit l'efficacité de l'échange de chaleur avec le fluide dans l'échangeur, et donc l'efficacité de l'appareil de réfrigération. Un tel phénomène est susceptible de s'auto-entretenir en diminuant de plus en plus le flux de chaleur disponible pour évaporer le produit à mesure que la couche solide augmente sur l'échangeur. Certains aspects de l'invention partent donc du constat que la présence ou l'absence d'un dépôt d'une couche solide sur l'échangeur de chaleur peut changer fondamentalement le mode de fonctionnement de l'appareil de réfrigération, passant d'un mode de réfrigération, dans lequel l'effet principal est de prélever un flux de chaleur élevé sur le fluide circulant dans l'échangeur de chaleur, à un mode d'accumulation, dans lequel l'effet dominant devient la production et l'accumulation d'une quantité de plus en plus importante de produit frigorigène en phase solide dans l'enceinte d'évaporation.

Certains aspects de l'invention sont basés sur l'idée de maximiser un flux thermique échangé entre un échangeur de chaleur disposé dans l'enceinte d'évaporation et un flux de produit frigorigène introduit dans cette enceinte pour y être refroidi subitement. Certains aspects de l'invention sont basés sur l'idée de mettre essentiellement tout le flux de produit frigorigène en contact direct avec une source de chaleur suffisamment intense pour apporter très rapidement aux particules de produit frigorigène la chaleur nécessaire à leur évaporation. Pour cela, il s'est avéré efficace de prévoir un échangeur de chaleur dans lequel chaque point de la surface d'échange à travers laquelle le flux thermique est transmis au produit frigorigène se trouve très proche du lieu de convection du fluide à refroidir ou à condenser circulant dans l'échangeur de chaleur.

Certains aspects de l'invention sont basés sur l'idée de fournir, en chaque point de contact entre la source de chaleur et les particules de produit frigorigène, suffisamment de chaleur pour évaporer le produit frigorigène en surfusion pour éviter la formation d'une phase solide.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :
- la Figure 1 est une représentation schématique d'un système de réfrigération selon un mode de réalisation de l'invention,
- la Figure 2 est une vue en perspective d'un premier mode de réalisation d'un échangeur de chaleur pouvant être utilisé dans le système de la Figure 1,
- la Figure 3 est une vue en coupe transversale de l'échangeur de la Figure 2,
- la Figure 4 est une représentation du diagramme des phases de l'eau en fonction de la température et de la pression,
- la Figure 5 est un diagramme de Mollier de l'eau montrant des points de fonctionnements possibles du système de la Figure 1,
- la Figure 6 est une vue partielle en coupe d'un deuxième mode de réalisation d'un échangeur de chaleur pouvant être utilisé dans le système de la Figure 1,
- la Figure 7 est une représentation schématique en perspective d'un troisième mode de réalisation d'un échangeur de chaleur pouvant être utilisé dans le système de la Figure 1 et d'un dispositif d'injection correspondant,
- la Figure 8 est une vue en coupe transversale de l'échangeur de la Figure 7,
- la Figure 9 est une représentation schématique en perspective d'un quatrième mode de réalisation d'un échangeur de chaleur pouvant être utilisé dans le système de la Figure 1,
- la Figure 10 représente un mode de réalisation d'un évaporateur comportant un échangeur de chaleur destiné à évaporer un dépôt solide,
- la Figure 11 est une vue en coupe de l'évaporateur de la figure 10 selon la ligne XI-XI.

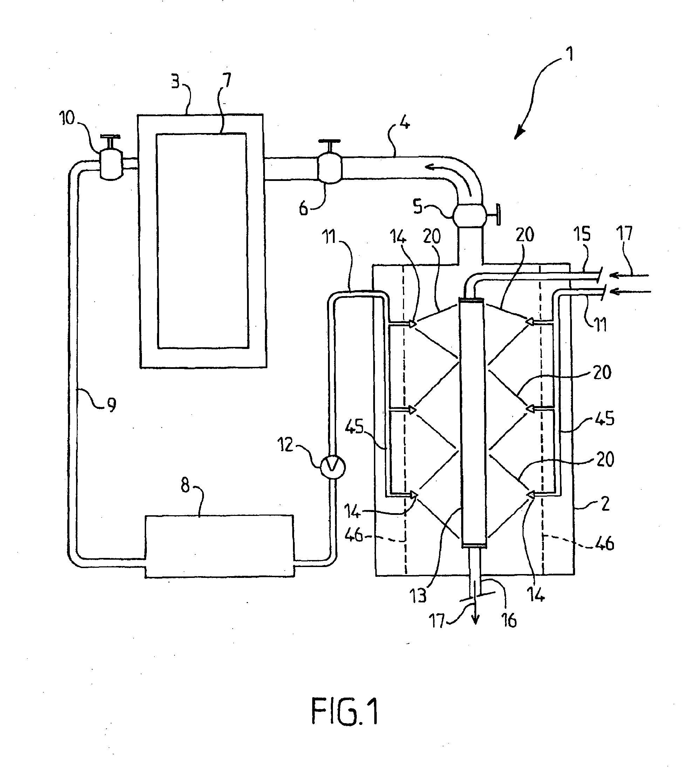

En référence à la figure 1, un système de réfrigération 1 comprend une enceinte sous vide formant évaporateur 2 et une enceinte d'adsorption 3 faisant générateur de vide, reliées l'une à l'autre par une canalisation de communication 4, qui est munie d'une vanne de régulation 5 et d'une première vanne d'isolement 6. L'enceinte d'adsorption 3 contient un matériau adsorbant 7 capable de fixer un produit frigorigène en phase vapeur par adsorption. Dans la suite de la description, on se référera au couple eau - zéolithe, mais d'autres produits frigorigènes et d'autres matériaux adsorbants sont envisageables. L'enceinte d'adsorption 3 est reliée à un condenseur 8 par une canalisation d'évacuation 9 munie d'une seconde vanne d'isolement 10. Un dispositif de chauffage non représenté peut être associé à l'enceinte d'adsorption 3 pour régénérer le matériau adsorbant après la phase d'adsorption et le ramener à son état initial, afin de lui permettre de démarrer un nouveau cycle d'adsorption et dé génération de vide.

Dans l'évaporateur 2 sont implantés plusieurs injecteurs 14 qui sont alimentés en produit frigorigène à l'état liquide par un circuit d'alimentation 11 et une pompe 12 à partir d'un réservoir, qui est ici le condenseur 8. Un échangeur de chaleur 13 muni d'une conduite d'entrée 15 et d'une conduite de sortie 16 permet de faire circuler un fluide, comme indiqué par les flèches 17, que l'on souhaite refroidir ou condenser en réalisant un échange de chaleur avec le produit frigorigène dans l'évaporateur 2.

Dans le système 1, l'eau utilisée comme fluide frigorigène est injectée dans l'évaporateur 2 dans des conditions provoquant son changement de phase à une température inférieure à celle de son point triple. Pour cela, l'adsorbant 7 est utilisé de manière à imposer dans l'évaporateur 2 une pression inférieure à celle de ce point triple. Le fluide frigorigène est injecté à travers les injecteurs 14, qui génèrent des jets 20 formés d'un brouillard très fin. Ce brouillard est constitué, soit par des gouttelettes liquides en surfusion, soit par de fines paillettes de glace, qui se déplacent en direction du corps de l'échangeur de chaleur 13 et s'évaporent au contact de celui-ci.

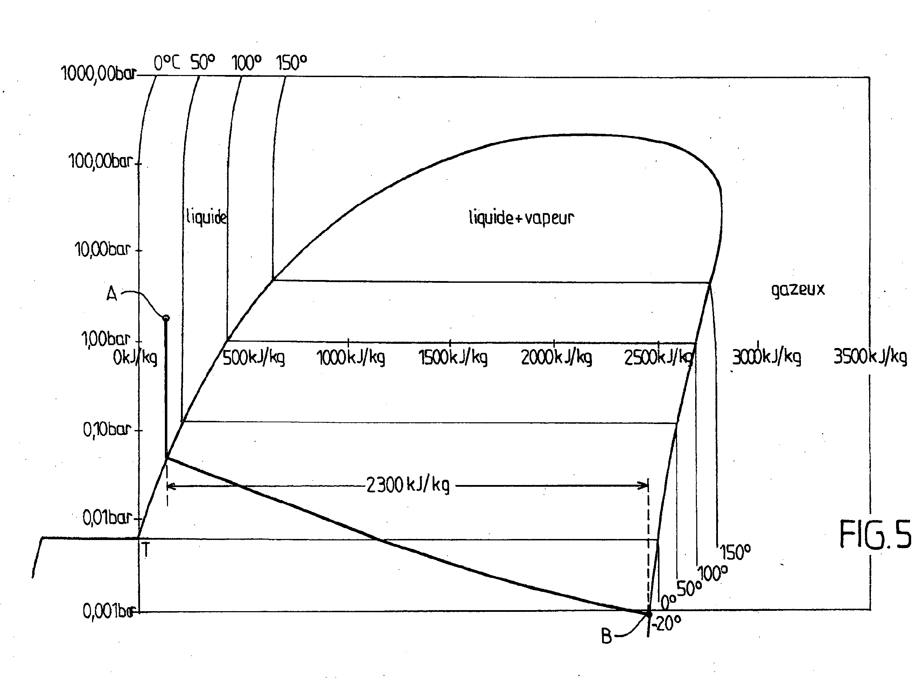

Comme on peut le voir sur la figure 5, dans le cas de l'eau, l'enthalpie d'évaporation varie très peu selon que l'on effectue un changement d'état de l'eau à une pression au dessus ou au dessous du point triple puisque la courbe d'évaporation est sensiblement verticale dans sa partie droite. On constate donc que le choix d'une évaporation au dessus ou en dessous du point triple permet de générer à peu près la même quantité de froid pour une masse d'eau donnée. L'exploitation du système en dessous du point triple permet d'atteindre une plage de température plus basse dans l'évaporateur, par exemple entre 0°C et -40°C dans le cas de l'eau.

On va maintenant décrire le fonctionnement du système de la figure 1 lors d'un cycle de réfrigération.

Sur la figure 1, une seule enceinte d'adsorption 3 est prévue pour imposer la basse pression d'évaporation dans l'évaporateur 2. Dans un dispositif de production de froid par adsorption mettant en oeuvre un seul adsorbeur, le fonctionnement est forcément discontinu, car il est nécessaire de régénérer l'adsorbeur, phase au cours de laquelle l'enceinte d'adsorption 3 doit être isolé de l'évaporateur 2 en fermant la vanne 6. Pour obtenir un fonctionnement en continu il est possible de coupler plusieurs adsorbeurs à un même évaporateur à l'aide de plusieurs canalisations et de faire fonctionner les adsorbeurs séquentiellement en ouvrant ou en fermant des vannes d'isolement correspondantes, comme explicité dans la demande de brevet WO-A-2004/111556.

Afin d'initier le procédé, il est préférable de vider l'ensemble du système en éliminant le plus possible les gaz incondensables qui ne participent pas au cycle frigorifique. Pour cela, une pompe à vide (non représentée) peut être utilisée pour obtenir une pression partielle d'incondensables inférieure à 0,1 mbar, de préférence de l'ordre de 0,01 mbar, dans l'évaporateur 2 et l'enceinte d'adsorption 3.

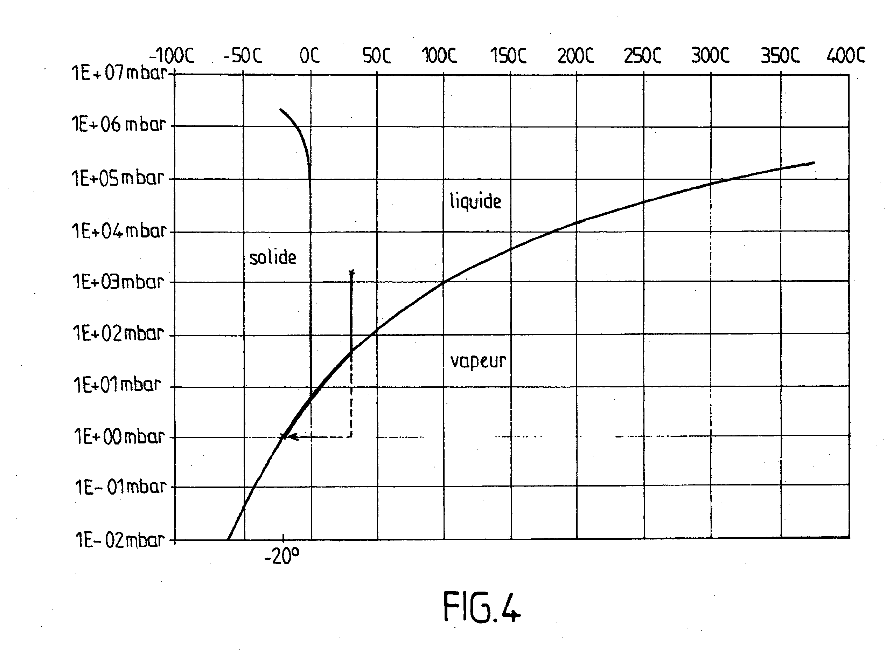

Pendant l'injection du produit frigorigène dans l'évaporateur 2, la pression dans l'évaporateur 2 est réglée en contrôlant la pression d'équilibre dans l'enceinte d'adsorption 3, par exemple par un contrôle de température de la zéolithe, et/ou en contrôlant la perte de charge dans la canalisation 4 à l'aide de la vanne de régulation 5. La pression dans l'évaporateur est réglée à un niveau sensiblement égal à la pression de vapeur saturante de l'eau à la température que l'on souhaite atteindre dans l'évaporateur 2, pour refroidir ou condenser le fluide qui circule dans l'échangeur 13. Dans l'exemple représenté sur les figures 4 et 5 avec de l'eau, cette température est de 20 degrés inférieure à celle du point triple de l'eau, c'est à dire de -20°C. Elle correspond par exemple à une température envisageable pour condenser du butane dans l'échangeur 13.

Sur les figures 4 et 5, on voit l'évolution de l'état de l'eau et l'enthalpie mise en oeuvre lors de son injection dans le système de réfrigération et de son évaporation dans un exemple de réalisation. Dans cet exemple, le point de départ se situe en phase liquide à une pression supérieure à la pression atmosphérique et à une température d'environ 40°C, et le point d'arrivée se situe en phase vapeur à la pression de vapeur saturante vers -20°C.

L'eau est injectée dans l'évaporateur 2 au moyen des injecteurs 14, par une pulvérisation en de fines gouttelettes, en direction des parois de l'échangeur de chaleur 13. Cette eau, qui se trouve brutalement soumise à une condition de pression qui ne correspond pas à sa phase d'équilibre liquide (cf. courbe en pointillés de la figure 4) va chercher naturellement à rejoindre le point d'équilibre imposé par la pression d'évaporation régnant dans l'évaporateur 2. La pression imposée étant inférieure à celle du fluide avant son injection, la température d'équilibre à atteindre l'est aussi. L'eau injectée va donc se refroidir brutalement. Si aucune chaleur n'était apportée à la particule d'eau, celle-ci atteindrait un point d'équilibre en se séparant en deux phases. Une fraction d'eau s'évaporerait refroidissant l'autre partie qui se changerait en phase solide et y resterait sans pouvoir totalement s'évaporer. Or, au moment où une particule d'eau rencontre la surface de l'échangeur 13, qui joue le rôle de source de chaleur en raison du fluide qu'on y fait circuler, celui-ci fournit à la particule d'eau une quantité importante de chaleur lui permettant de se vaporiser quasi instantanément sous la pression imposée. L'échange de chaleur se fait donc à une température imposée correspondant à la basse pression maintenue dans l'évaporateur 2. Comme cette pression est inférieure à la pression du point triple, il est possible que l'eau passe par une phase solide avant de se sublimer. Ce serait notamment le cas dans un évaporateur lent ou discontinu. Toutefois, si l'introduction et la projection de l'eau en dessous du point triple sont suffisamment rapides, le fluide reste en phase liquide, sous la forme d'un brouillard en surfusion, sans jamais passer par une phase solide observable jusqu'au contact avec l'échangeur 13 où le fluide se transforme définitivement en vapeur. Dans tous les cas, quel que soit le chemin thermodynamique réellement parcouru par l'eau, ou le fluide donné, la chaleur absorbée lors du changement de phase correspond à la variation d'enthalpie entre le point A en phase liquide aux pression/température initiales d'introduction et le point B en phase vapeur aux pression/température finales d'évaporation, comme représentés sur la figure 5. Cette quantité de chaleur est fournie par le fluide que l'on refroidit et/ou condense dans l'échangeur de chaleur 13.

Afin d'obtenir un échange de chaleur efficace, l'eau injectée doit pouvoir rencontrer la surface d'échange et recevoir la chaleur sans être gênée par un dépôt de glace. La glace étant mauvaise conductrice de chaleur, le dépôt créerait alors une résistance thermique dégradant considérablement le transfert de chaleur. Pour éviter l'apparition de glace sur l'échangeur, un équilibre doit être trouvé entre l'apport de froid généré par la évaporation de l'eau et l'apport de chaleur par le fluide à refroidir ou à condenser. Le changement de phase de l'eau nécessite des flux thermiques importants. La surface d'échange doit donc présenter des coefficients d'échanges importants, et donc avoir des échanges convectifs importants dans les canaux. En général, les transferts de chaleur sont d'autant plus importants que la vitesse de circulation du fluide dans l'échangeur est élevée, ce qui favorise donc une évaporation complète.

A contrario une circulation trop lente n'apporte pas assez de calories à l'eau évaporée qui ne s'évapore donc pas complètement et laisse un dépôt de glace se former sur l'échangeur. Le niveau limite du fonctionnement du système se situe donc lorsque la glace est évaporée au fur et à mesure qu'elle se dépose sur les surfaces extérieures de l'échangeur 13, sans qu'une couche s'y établisse de façon stable. En d'autres termes, toute particule de produit en phase solide doit être évaporée dans un temps inférieur au temps nécessaire pour qu'elle s'agglomère à d'autres particules.

Pour maintenir le système dans cet état de fonctionnement sans formation de glace, il est possible de réaliser un contrôle des températures du fluide aux entrées et sorties de l'échangeur et de son débit afin de contrôler les flux de chaleur transférés. Ce type de contrôle permet d'anticiper l'approche du niveau de transfert critique, où un dépôt de glace commence à s'accumuler. Ce contrôle permet aussi de mettre en évidence une éventuelle chute de puissance due à la formation d'un dépôt de glace. Par ailleurs, il est possible de procéder à une surveillance optique ou visuelle de la surface de l'échangeur pour réaliser un contrôle plus curatif et moins préventif.

Lorsqu'un dépôt de glace est anticipé ou détecté, il est possible de rétroagir sur le débit d'eau injecté par la pompe 12, sur le débit de fluide circulant dans l'échangeur 13, par exemple au moyen d'une vanne ou d'une pompe non représentées, et/ou sur l'ouverture de la vanne de régulation 5. En particulier, la circulation du fluide dans l'échangeur peut être augmentée afin d'éliminer le dépôt et de retrouver l'équilibre des transferts de chaleur. Puis le retour à un point de fonctionnement proche du point d'apparition de la glace peut être effectué en réduisant la vitesse de circulation ou en augmentant le débit d'eau injecté. Une procédure de contrôle-commande automatisée peut être mise en oeuvre sur la base de ces principes.

La puissance frigorifique du système 1 résulte du débit massique d'eau qu'il est possible d'injecter et d'évaporer en continu, sans que cette eau se transforme en glace et vienne se coller sur les éléments constitutifs de l'échangeur 13. Pour cela, une ou plusieurs enceintes d'adsorption doivent être capables de maintenir la pression d'évaporation correspondant à la température souhaitée pendant toute la période de production de froid. De plus, plusieurs caractéristiques de l'échangeur de chaleur et du dispositif d'injection se sont avérées importantes. Ainsi, il est préférable que la totalité du flux d'eau injecté entre directement en contact avec l'échangeur de chaleur, afin de limiter la possibilité que des particules d'eau gèlent sur des parties froides de l'évaporateur 2 sans avoir reçu le flux de chaleur nécessaire à leur vaporisation. En outre, l'échangeur de chaleur doit être capable de transmettre efficacement les calories du fluide à refroidir au produit frigorigène. En particulier, tout élément de surface de l'échangeur interceptant la pulvérisation présente de préférence un coefficient d'échange suffisamment important afin de limiter la possibilité que des particules d'eau gèlent avant d'avoir reçu la chaleur nécessaire à leur évaporation.

La surface d'échange de l'échangeur 13 doit être d'autant plus importante que la puissance recherchée est grande. Cette surface doit présenter un coefficient d'échange satisfaisant sur toute son étendue, afin d'éviter un dépôt de glace sur des parties à faible coefficient d'échange, par exemple à l'extrémité d'une ailette. Pour cela, les géométries à ailettes sont évitées, car le coefficient d'échange diminue à mesure que la distance augmente entre l'élément de surface considéré et le circuit de fluide interne de l'échangeur, ce qui est typiquement le cas le long d'une ailette. Plusieurs exemples de réalisation de l'échangeur de chaleur permettant de réaliser ces conditions vont être maintenant décrits.

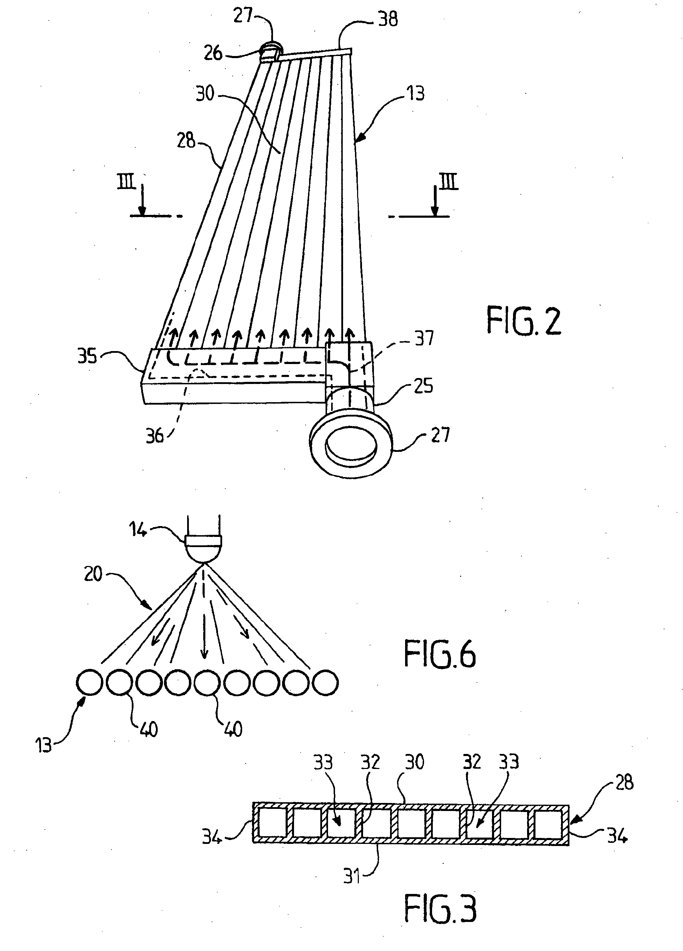

Dans le mode de réalisation des figures 2 et 3, l'échangeur de chaleur 13 présente une forme générale de plaque rectangulaire allongée. Il présente un tube d'entrée 25 au niveau d'un coin et un tube de sortie 26 au niveau du coin diagonalement opposé, chaque tube étant muni d'une bride de fixation 27 pour son raccord aux conduites 15 et 16 respectivement. Comme visible sur la figure 3, le corps 28 de l'échangeur est ici constitué d'un profilé à section rectangulaire, pouvant être réalisé par exemple par extrusion, par exemple en aluminium ou autre métal. Il comporte deux parois rectangulaires opposées 30 et 31 dont les surfaces extérieures constituent les surfaces d'échange devant recevoir les jets de produit atomisés, et des parois de séparation internes 32 et externes 34 s'étendant perpendiculairement aux parois 30 et 31 entre celles-ci de manière à délimiter une pluralité de canaux longitudinaux parallèles 33, au nombre de neuf sur la figure 3.

Entre le tube d'entrée 25 et le corps 28 se trouve un élément distributeur creux 35, par exemple de forme rectangulaire, dont l'intérieur forme une chambre d'entrée 36 pour distribuer le fluide entrant par le tube 25 dans tous les canaux 33, comme indiqué par la flèche 37. Un élément collecteur 38 de forme similaire se trouve à l'autre extrémité du corps 28 pour rassembler les flux de fluide provenant des canaux 33 dans une chambre de sortie et les évacuer dans le tube 26. Dans ce mode de réalisation, les canaux 33 sont utilisés pour conduire des flux parallèles de même sens. Un micro-rainurage peut être pratiqué à l'intérieur des canaux 33 pour accroître leur surface d'échange. Les canaux 33 sont dimensionnés de manière à favoriser le coefficient de convection de l'échangeur. Par exemple une section hydraulique de quelques mm² peut être appropriée.

Dans une variante de réalisation, les parois de séparation 32 sont prolongées alternativement dans la chambre d'entrée 36 et dans la chambre de sortie pour relier les canaux 33 successivement en série, de manière que deux canaux voisins sont parcourus par des flux de sens opposés. Un tel mode de réalisation peut favoriser l'uniformité de l'écoulement de fluide dans l'échangeur 13, au prix d'une perte de charge plus élevée.

Dans un autre mode de réalisation représenté sur la figure 6, le corps 28 est remplacé par un réseau de tuyaux parallèles 40 s'étendant entre les éléments 35 et 38. Les tuyaux 40, par exemple à section circulaire, peuvent être reliés de la même manière en parallèle ou en série. Ils sont disposés côte à côte de manière jointive ou sensiblement jointive sur une ligne ou en quinconce sur deux lignes ou plus, de sorte qu'au plus une fraction négligeable du flux de produit injecté puisse traverser l'échangeur 13 sans entrer à son contact.

Sur la figure 1, les injecteurs 14 délivrent un jet de brouillard en forme de cône 20. Ils peuvent être disposés de différentes manières pour couvrir au mieux les deux surfaces d'échange 30 et 31 de l'échangeur 13, par exemple en lignes ou selon un quadrillage droit ou en quinconce. La figure 6 illustre le cas d'un injecteur 14 produisant un jet conique de largeur sensiblement égale à la largeur de l'échangeur 13.

De préférence, le jet de brouillard en forme de cône délivré par ces injecteurs est homogène et plein. Cela permet d'éviter une trop forte concentration de particules de produit frigorigène au niveau de certaines parties de la surface d'échange qui nécessiterait une chaleur à fournir trop importante sur ces parties pour évaporer le fluide en surfusion. Lorsque la chaleur à fournir pour évaporer les particules de produit frigorigène est ainsi suffisante sur toute la surface d'échange, la formation d'une phase solide sur la surface d'échange est empêchée.

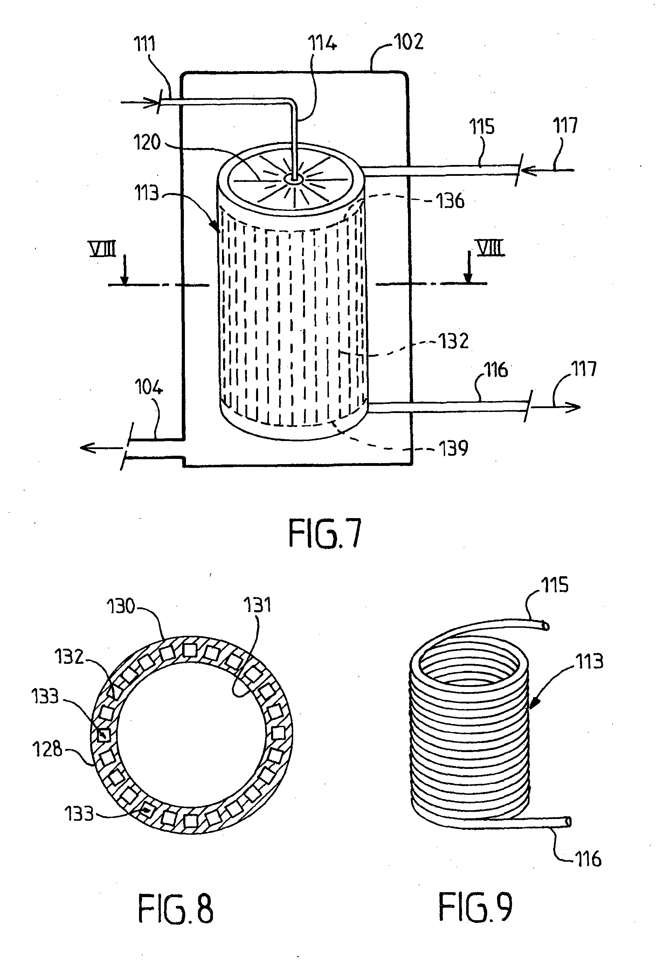

En référence aux figures 7 à 9, d'autres modes de réalisation vont être décrits, dans lesquels les éléments identiques ou similaires à ceux des figures 1 à 3 portent le même chiffre de référence augmenté de 100.

Sur les figures 7 et 8, l'échangeur de chaleur 113 présente une forme générale d'enveloppe cylindrique circulaire dont l'intérieur est creusé de manière à délimiter un circuit de fluide. A une extrémité longitudinale de l'échangeur 113, le circuit comporte une chambre annulaire d'entrée 136 raccordée à une conduite d'entrée 115 et, à l'extrémité longitudinale opposée, une chambre annulaire de collecte 139 raccordée à une conduite de sortie 116. Entre les deux, le corps 128 présente un réseau de canaux longitudinaux parallèles 133 délimités par des parois internes 132. Le fluide est mis en circulation entre les chambres 136 et 139 à travers les canaux 133 en parallèle. En agençant des parois dans les chambres 136 et 139, une liaison fluide en série est également possible.

Sur la figure 7, l'injecteur 114 est agencé à l'extrémité supérieure de l'échangeur 133, de manière centrée, pour injecter un jet conique ou sensiblement hémisphérique 120 sur la surface d'échange 131 située à l'intérieur de l'enveloppe cylindrique. D'autres injecteurs non représentés peuvent être disposés de manière similaire à la disposition de la figure 1 pour injecter le produit frigorigène également sur la surface d'échange 130 située à l'extérieur de l'enveloppe cylindrique.

Dans le mode de réalisation de la figure 9, l'échangeur 113 est constitué essentiellement d'un tube, par exemple métallique, enroulé en spires circulaires jointives ou sensiblement jointives pour former une enveloppe cylindrique circulaire. Toutefois, ce mode de réalisation présente une perte de charge plus élevée que le précédent.

Un échangeur de chaleur peut aussi être réalisé en assemblant plusieurs exemplaires des échangeurs élémentaires représentés sur les figures susmentionnées. Un tel assemblage peut comporter plusieurs échangeurs élémentaires connectés en parallèle et/ou en série.

Pour favoriser le contact et le transfert de chaleur entre la gouttelette d'eau et la surface d'échange, il est préférable que cette surface présente une mouillabilité importante. Plus la gouttelette peut s'étaler lors de son impact, plus la surface d'échange est grande pour une même quantité d'eau à évaporer, ce qui favorise l'échange thermique. Cette mouillabilité se caractérise par une tension de surface faible. Un choix des matériaux de l'échangeur de chaleur et/ou un traitement de surface peut être fait afin de diminuer cette tension de surface. Le contact et le transfert de chaleur peuvent aussi être favorisés en augmentant la rugosité de la surface d'échange, par exemple à la suite d'un traitement de surface par grenaillage.

Pour maximiser la puissance du système, l'injection de l'eau est de préférence répartie de façon sensiblement uniforme sur toutes les surfaces d'échange de l'échangeur 13 ou 113. A cet effet, l'injection de l'eau peut être réalisée à travers un ou plusieurs injecteurs, selon le volume d'eau à injecter et la puissance recherchée. Pour obtenir une bonne évaporation, l'injection d'eau s'effectue de préférence sous la forme de gouttelettes dont le diamètre moyen est inférieur à 100 microns. L'injection du liquide et la formation d'un brouillard sont facilités s'il existe un écart important entre la pression d'injection et la pression régnant dans l'évaporateur 2. Pour cela l'eau est de préférence injectée au moyen de la pompe 12 sous une légère surpression par rapport à la pression atmosphérique, par exemple de l'ordre de 2 à 3 bars.

Dès la sortie de l'injecteur 14, le produit frigorigène se retrouve dans le milieu à basse pression qui règne dans l'évaporateur 2. Dès cet instant, il est préférable que tout le produit soit expulsée et perde tout contact avec l'injecteur. En effet si une partie du produit adhère à l'injecteur, son ralentissement peut faciliter sa solidification, avec pour conséquences indésirables la formation de morceaux de phase solide délicats à évaporer, une perturbation de la pulvérisation, voire le bouchage de l'injecteur. Contre ce risque, une première solution consiste à rendre très peu adhérente la périphérie de la sortie de l'injecteur par un traitement de surface permettant d'augmenter la tension de surface, par exemple par le dépôt d'un film hydrophobe. Il est aussi possible de maintenir l'injecteur à une température suffisamment chaude, au dessus du point triple, au moyen d'un dispositif de chauffage, disposé par exemple à la périphérie de la sortie des injecteurs.

Lors des phases d'arrêt où le produit frigorigène n'est plus pulvérisé, une quantité de celui-ci peut rester en amont de la sortie, à l'intérieur d'un injecteur. N'étant plus en mouvement, ce reste de produit frigorigène stagnant peut alors librement s'équilibrer à la pression régnant dans l'enceinte et donc se transformer en phase solide si la pression reste en dessous du point triple, ce qui aurait pour conséquence gênante de boucher l'injecteur 14. Pour éviter cela, un dispositif permettant de purger et sécher tout l'intérieur des injecteurs peut être prévu, par exemple en plaçant un moyen de chauffage à l'intérieur des injecteurs pour évaporer tout reste de produit.

Afin de réduire le risque de solidification du produit frigorigène dans les injecteurs 14 et le circuit d'alimentation 11 à l'arrêt, il est préférable d'obturer ces éléments à un niveau proche de la sortie du produit, par exemple au moyen d'électrovannes montées à proximité des injecteurs ou intégrées à ceux-ci. Sur la figure 1, la partie terminale 45 du circuit d'alimentation 11 est logée dans une garniture d'isolation thermique 46 disposée dans la paroi de l'évaporateur 2 En variante, cette partie 45 peut aussi être disposée à découvert dans l'évaporateur 2.

Des dispositifs peuvent être prévus pour favoriser l'évacuation de la phase solide lorsque celle-ci se forme dans l'évaporateur. Par exemple, si un dépôt de produit en phase solide se forme au contact d'un échangeur de chaleur et qu'il n'est pas possible de l'évaporer instantanément, il est préférable de favoriser le décrochage de ce dépôt avant qu'il ne crée une barrière thermique significative. Pour cela, des dispositifs vibrants ou de chocs peuvent être couplés à l'échangeur de chaleur, tels que des dispositifs électromagnétiques à bobine et moyeu magnétique dont les sollicitations peuvent être contrôlés, comme on le souhaite, par exemple par un signal oscillant pour des créer des vibrations avec une fréquence adaptée à la structure, ou par impulsion si l'on veut des chocs. Un autre exemple consiste à utiliser un pot vibrant, comportant un moteur électrique avec balourd excentré. Des dispositifs vibrants ou de chocs peuvent être couplés aux injecteurs pour éviter leur obstruction par un dépôt solide. Ces dispositifs vibrants ou de chocs peuvent être utilisés à titre préventif de manière continue ou périodique ou à tire curatif en réponse à la détection d'une formation solide.

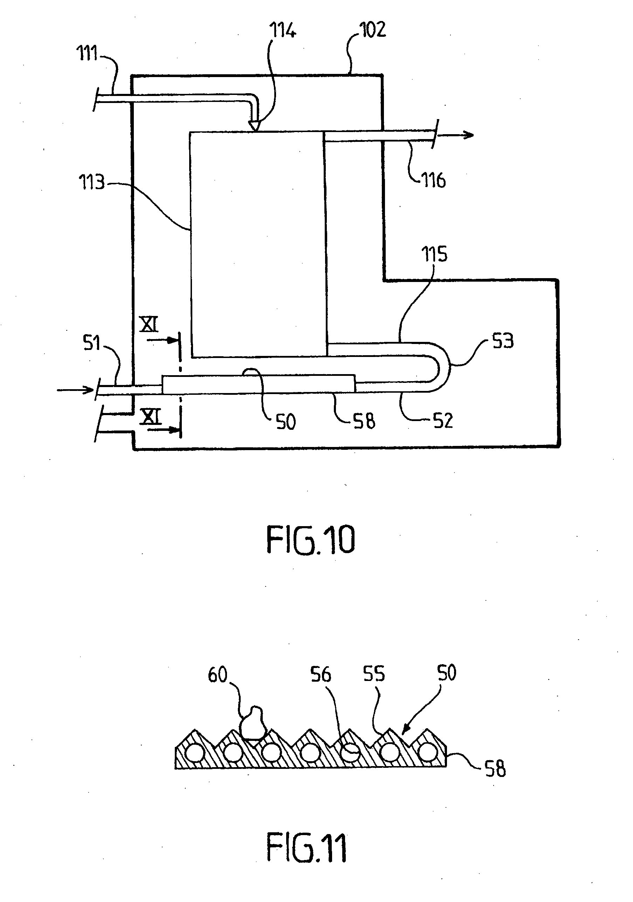

Pour permettre l'évaporation ultérieure des morceaux de produit solide pouvant s'être formés dans l'évaporateur, il est préférable de les mettre en contact avec un dispositif susceptible de leur apporter de la chaleur. Ce dispositif peut notamment être le même échangeur de chaleur que celui sur lequel on injecte le produit, ou un autre échangeur de chaleur. Un mode de réalisation de cette dernière option va maintenant être décrit en référence aux figures 10 et 11.

Sur la figure 10, les éléments identiques ou analogues à ceux de la figure 7 portent le même chiffre de référence. Ici, un plateau de récupération 50 est disposé sous l'échangeur cylindrique 113, de manière à collecter tout morceau de produit en phase solide qui tombe par gravité de l'échangeur 113 ou de l'injecteur 114, par exemple sous l'effet de dispositifs vibratoires non représentés. Le plateau 50 évite que ces morceaux ne s'accumulent au fond de l'évaporateur 102, où il serait difficile de les évaporer faute d'un apport de chaleur suffisant. Par contraste, le plateau 50 est formé par la surface supérieure d'un échangeur de chaleur 58 disposé à plat qui comporte un tuyau d'entrée 51 et un tuyau de sortie 52 pour faire circuler un fluide destiné à apporter la chaleur nécessaire. Cet échangeur de chaleur peut être alimenté indépendamment de l'échangeur 113. Dans l'exemple représenté sur la figure 10, l'échangeur 58 est branché en série avec l'échangeur 113 par un tuyau de raccord 53, en amont avec celui-ci, de manière à recevoir le fluide dans l'état le plus chaud pour favoriser la sublimation des morceaux solides. Sur la figure 10, le fluide dans les échangeurs circule dans le sens inverse de la figure 7.

L'échangeur de chaleur 58 peut être réalisé de nombreuses manières, par exemple similairement à l'échangeur 13 dans la figure 2. Dans l'exemple représenté sur la figure 11, il comporte un réseau de canaux parallèles 56 à section circulaire. De plus, la surface supérieure 50 présente un profil à rainures triangulaires 55 pour favoriser le contact de la surface 50 avec les morceaux solides, comme illustré au chiffre 60.

Par ailleurs, la qualité du vide dans l'évaporateur 2 est un paramètre qui influe directement sur la bonne évaporation de l'eau. En effet, les gaz incondensables, notamment azote et oxygène de l'air, ne participent pas utilement au procédé et s'opposent à une bonne circulation des molécules d'eau. La pression partielle de ces gaz ne participant pas au cycle d'adsorption doit être négligeable devant la pression d'évaporation souhaitée pour le fluide frigorigène. Dans le cas de l'eau, la pression partielle des incondensables est de préférence inférieure à 0,1 mbar, et plus préférentiellement de l'ordre de 0,01 mbar. Comme l'eau peut contenir initialement de l'air dissous, la pompe à vide précitée peut être utilisée pour purger le circuit lors du dégazage de l'eau au cours des premiers cycles.

Enfin la qualité de l'eau injectée a aussi une certaine importance puisque la présence d'impuretés tend à créer sur la surface de l'échangeur 13 un dépôt défavorable aux échanges thermiques. Pour cela, il est préférable d'utiliser de l'eau déminéralisée ayant une résistivité égale ou supérieure à 1 MΩcm, ou de façon préférentielle de l'eau distillée.

Le système de la figure 1 permet d'utiliser le produit frigorigène en circuit fermé, en condensant dans le condenseur 8 le produit en phase vapeur expulsé lors de la régénération de l'adsorbant 7. Toutefois, ce mode de fonctionnement n'est pas le seul possible. Un fonctionnement en circuit ouvert est aussi possible, notamment lorsque le produit frigorigène peut être évacué dans l'environnement. La canalisation 9 n'est alors pas nécessaire.

Le système de la figure 1 et ses variantes peuvent être exploités de manière indépendante, pour refroidir un fluide circulant dans l'échangeur de chaleur 13 ou 113. Ils peuvent aussi être exploités au sein d'une machine multi-étagée pour produire le froid nécessaire à la condensation du produit frigorigène d'un étage suivant, selon les principes décrits dans WO-A-2004/111556. Dans ce cas, l'échangeur de chaleur 13 ou 113 peut constituer le condenseur de l'étage suivant de la machine

Bien que l'invention ait été décrite en relation avec plusieurs modes particuliers de réalisation, il est bien évident qu'elle n'y est nullement limitée et qu'elle comprend tous les équivalents techniques des moyens décrits, ainsi que leurs combinaisons si celles-ci entrent dans le cadre de l'invention, définie par l'objet des revendications 1 à 18.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Dans les revendications, tout chiffre de référence entre parenthèses ne saurait être interprété comme une limitation de la revendication.

## Revendications

1. Système de réfrigération (1) comportant :
une enceinte d'évaporation (2, 102),
un produit frigorigène,
un dispositif d'injection (14, 114) pour introduire le produit frigorigène en phase liquide sous la forme d'un jet atomisé (20, 120) dans ladite enceinte d'évaporation,
un dispositif d'adsorption (3) reliée à l'enceinte d'évaporation et comportant un adsorbant (7) susceptible d'adsorber le produit frigorigène en phase vapeur,
un échangeur de chaleur (13, 113) disposé dans l'enceinte d'évaporation pour réaliser un échange de chaleur entre le produit frigorigène dans l'enceinte d'évaporation et un fluide dans l'échangeur de chaleur,
**caractérisé par le fait que** ledit dispositif d'adsorption est apte à générer une dépression dans l'enceinte d'évaporation pour abaisser la température du produit frigorigène dans l'enceinte d'évaporation en dessous du point triple du produit frigorigène, le dispositif d'injection étant apte à générer le jet atomisé dans ladite enceinte d'évaporation sous la forme d'un brouillard constitué de gouttelettes liquides en surfusion et **le fait que** l'échangeur de chaleur comporte une surface extérieure d'échange (30, 31 ; 130, 131) disposée de manière à intercepter sensiblement tout le jet atomisée de produit frigorigène en surfusion et une surface intérieure délimitant un circuit de fluide (33, 133) agencé de manière à réaliser un échange de chaleur efficace entre le fluide et sensiblement toute l'étendue de la surface extérieure d'échange, de sorte que le brouillard de produit frigorigène en surfusion puisse être évaporé sans accumuler une fraction solide du produit frigorigène sur ladite surface extérieure d'échange au cours de l'introduction du produit frigorigène dans l'enceinte d'évaporation.

2. Système selon la revendication 1, dans lequel la surface extérieure d'échange est disposée perpendiculairement au jet liquide atomisé ou sous faible incidence.

3. Système selon la revendication 1 ou 2, dans lequel la surface extérieure d'échange s'étend verticalement.

4. Système selon l'une des revendications 1 à 3, dans lequel le circuit de fluide de l'échangeur de chaleur comporte une pluralité de tuyaux (40) ou de canaux (33) parallèles disposés côte à côte le long de la surface d'échange.

5. Système selon l'une des revendications 1 à 4, dans lequel la surface extérieure d'échange est continue ou sensiblement continue.

6. Système selon l'une des revendications 1 à 5, dans lequel l'échangeur de chaleur comporte un corps unitaire profilé (28, 128) présentant une pluralité de canaux internes parallèles.

7. Système selon l'une des revendications 1 à 6, dans lequel ladite ou chaque surface extérieure d'échange présente un état de surface favorisant la mouillabilité de ladite surface.

8. Système selon l'une des revendications 1 à 7, dans lequel l'échangeur de chaleur présente deux surfaces extérieures d'échange disposées de part et d'autre du circuit de fluide et le dispositif d'injection présente au moins deux injecteurs (14) disposés de manière que chacune desdites surfaces extérieures d'échange intercepte au moins un jet atomisé (20, 120) de produit frigorigène.

9. Système selon l'une des revendications 1 à 8, dans lequel l'échangeur de chaleur (113) présente une forme d'enveloppe tubulaire ouverte à ses extrémités et comporte une surface extérieure d'échange (131) située à l'intérieur du tube.

10. Système selon l'une des revendications 1 à 9, comportant en outre des moyens de contrôle de flux (12, 5) pour contrôler au moins un flux sélectionné dans le groupe consistant en le flux du produit frigorigène introduit dans l'enceinte d'évaporation, le flux du produit frigorigène adsorbé par le dispositif d'adsorption et le flux du fluide circulant dans l'échangeur de chaleur.

11. Système selon l'une des revendications 1 à 10, dans lequel l'adsorbant (7) comporte une zéolithe.

12. Système selon l'une des revendications 1 à 11, dans lequel le produit frigorigène comporte de l'eau.

13. Système selon l'une des revendications 1 à 12, dans lequel le dispositif d'injection (14) est apte à atomiser le produit frigorigène en particules de diamètre inférieur à 100 microns, de préférence en particules d'environ 10 microns.

14. Système selon l'une des revendications 1 à 13, comportant en outre un dispositif de récupération (50) agencé en dessous de l'échangeur de chaleur et apte à collecter des morceaux de phase solide du produit frigorigène tombant de l'échangeur de chaleur.

15. Système selon la revendication 14, dans lequel le dispositif de récupération (50) comporte un deuxième échangeur de chaleur (58).

16. Procédé de réfrigération comportant les étapes consistant à :
introduire un produit frigorigène en phase liquide sous la forme d'un jet atomisé dans une enceinte d'évaporation,
abaisser la température du produit frigorigène dans ladite enceinte d'évaporation en dessous du point triple du produit frigorigène de manière que le produit frigorigène reste en phase liquide sous la forme d'un brouillard constitué par des gouttelettes liquides en surfusion par mise en communication de ladite enceinte d'évaporation avec un adsorbant susceptible d'adsorber le produit frigorigène en phase vapeur,
réaliser un échange de chaleur entre le brouillard de produit frigorigène en surfusion dans ladite enceinte d'évaporation et un fluide dans un échangeur de chaleur disposé dans l'enceinte d'évaporation, l'échangeur de chaleur comportant une surface extérieure d'échange disposée de manière à intercepter sensiblement tout Ic jet atomisée de produit frigorigène et
une surface intérieure délimitant un circuit de fluide agencé de manière à réaliser un échange de chaleur efficace entre le fluide et sensiblement toute l'étendue de la surface extérieure d'échange, et
évaporer le brouillard de produit frigorigène en surfusion introduit dans l'enceinte d'évaporation sans accumuler une fraction solide du produit frigorigène sur ladite surface extérieure d'échange au cours de l'introduction du produit frigorigène dans l'enceinte d'évaporation.

17. Procédé selon la revendication 16, dans lequel on évapore sensiblement tout le produit frigorigène à mesure de l'introduction du produit frigorigène dans l'enceinte d'évaporation.

18. Procédé selon la revendication 16 ou 17, dans lequel l'échange de chaleur abaisse la température du fluide dans l'échangeur de chaleur en dessous dudit point triple du produit frigorigène.

## Patentansprüche

1. Kühlsystem (1) umfassend:
eine Verdampfungskammer (2, 102),
ein Kühlmittel,
eine Einspritzvorrichtung (14,114) zum Einführen des sich in Flüssigphase befindlichen Kühlmittels in Form eines zerstäubten Strahls (20, 120) in die Verdampfungskammer,
eine Adsorptionsvorrichtung (3), die mit der Verdampfungskammer verbunden ist, und ein Adsorptionsmittel (7) umfasst, welches dazu geeignet ist, das sich in Dampfphase befindliche Kühlmittel zu adsorbieren,
ein Wärmetauscher (13, 113), der in der Verdampfungskammer angeordnet ist, um einen Wärmeaustausch zwischen dem Kühlmittel in der Verdampfungskammer und einer Flüssigkeit in dem Wärmetauscher durchzuführen,
**dadurch gekennzeichnet, dass** die Adsorptionsvorrichtung in der Lage ist, einen Unterdruck in der Verdampfungskammer herbeizuführen, um die Temperatur des Kühlmittels in der Verdampfungskammer unter den Tripelpunkt des Kühlmittels zu senken, wobei die Einspritzvorrichtung in der Lage ist, in der Verdampfungskammer den zerstäubten Strahl in Form eines Nebels, gebildet aus flüssigen unterkühlten Tröpfchen, zu erzeugen, und dass der Wärmetauscher eine äußere Austauschfläche (30, 31; 130, 131) aufweist, die so ausgestaltet ist, dass sie im Wesentlichen den gesamten zerstäubten Strahl des unterkühlten Kühlmittels abfängt, und eine Innenfläche, die einen Flüssigkeitskreislauf (33, 133) begrenzt,
so angeordnet, dass ein wirksamer Wärmeaustausch zwischen der Flüssigkeit und im Wesentlichen dem gesamten Umfang der äußeren Austauschfläche erfolgt, so dass der Nebel des unterkühlten Kühlmittels verdampfen kann, ohne dass sich feste Teile des Kühlmittels auf der äußeren Austauschfläche ansammeln, während das Kühlmittel in die Verdampfungskammer eingeführt wird.

2. System gemäß Anspruch 1, wobei die äußere Austauschfläche senkrecht zum zerstäubten Flüssigkeitsstrahl oder unter einem kleinen Einfallswinkel ausgerichtet ist.

3. System gemäß Anspruch 1 oder 2, wobei sich die äußere Austauschfläche vertikal erstreckt.

4. System gemäß einem der Ansprüche 1 bis 3, wobei der Flüssigkeitskreislauf des Wärmetauschers aus einer Vielzahl von parallelen Rohren (30) oder Kanälen (33) besteht, welche nebeneinander entlang der Austauschfläche angeordnet sind.

5. System gemäß einem der Ansprüche 1 bis 4, wobei die äußere Austauschfläche durchgehend oder im Wesentlichen durchgehend ausgebildet ist.

6. System gemäß einem der Ansprüche 1 bis 5, wobei der Wärmetauscher einen einheitlich profilierten Körper (28, 128) mit einer Vielzahl von parallelen Innenkanälen umfasst.

7. System gemäß einem der Ansprüche 1 bis 6, wobei die oder jede äußere Austauschfläche eine Oberflächenbeschaffenheit aufweist, welche die Benetzbarkeit der Oberfläche begünstigt.

8. System gemäß einem der Ansprüche 1 bis 7, wobei der Wärmetauscher zwei äußere Austauschflächen aufweist, welche beiderseits des Flüssigkeitskreislaufs angeordnet sind, und wobei die Einspritzvorrichtung mindestens zwei Einspritzdüsen (14) aufweist, die so angeordnet sind, dass jede der äußeren Austauschflächen mindestens einen zerstäubten Strahl (20, 120) des Kühlmittels abfängt.

9. System gemäß einem der Ansprüche 1 bis 8, wobei der Wärmetauscher (113) hülsenförmig mit offenen Enden ausgestattet ist und eine äußere Austauschfläche (131) aufweist, welche im Inneren der Hülse angeordnet ist.

10. System gemäß einem der Ansprüche 1 bis 9, welches außerdem Flusskontrollmittel (12, 5) umfasst, um mindestens einen Fluss, ausgewählt aus der Gruppe bestehend aus dem Fluss des Kühlmittels, welches in die Verdampfungskammer eingeführt wird, dem Fluss des Kühlmittels, welches durch die Adsorptionsvorrichtung adsorbiert wird, und dem Fluss der Flüssigkeit, welcher in dem Wärmetauscher zirkuliert, zu kontrollieren.

11. System gemäß einem der Ansprüche 1 bis 10, wobei das Adsorptionsmittel (7) einen Zeolith umfasst.

12. System gemäß einem der Ansprüche 1 bis 11, wobei das Kühlmittel Wasser umfasst.

13. System gemäß einem der Ansprüche 1 bis 12, wobei die Einspritzvorrichtung (14) ausgebildet ist, das Kühlmittel in Partikel mit einem Durchmesser unter 100 Mikron zu zerstäuben, vorzugsweise in Partikel von ungefähr 10 Mikron.

14. System gemäß einem der Ansprüche 1 bis 13, welches außerdem eine Rückgewinnungsvorrichtung (50) umfasst, welche unterhalb des Wärmetauschers angeordnet und dazu in der Lage ist, feste Teile des Kühlmittels zu sammeln, welche von dem Wärmetauscher fallen.

15. System gemäß Anspruch 14, wobei die Rückgewinnungsvorrichtung (50) einen zweiten Wärmetauscher (58) umfasst.

16. Kühlverfahren, welches folgende Schritte umfasst:
Einführen eines Kühlmittels in flüssiger Phase in Form eines zerstäubten Strahls in eine Verdampfungskammer,
Absenken der Temperatur des Kühlmittels in der Verdampfungskammer unter den Tripelpunkt des Kühlmittels, so dass das Kühlmittel in flüssiger Phase bestehen bleibt, in Form eines aus unterkühlten flüssigen Tröpfchen bestehenden Nebels durch Verbindung der Verdampfungskammer mit einem Adsorptionsmittel, das dazu geeignet ist, das Kühlmittel in der Dampfphase zu adsorbieren,
Realisieren eines Wärmeaustausches zwischen dem Nebel des unterkühlten Kühlmittels in der Verdampfungskammer und einer Flüssigkeit in einem Wärmetauscher, welcher sich in der Verdampfungskammer befindet, wobei der Wärmetauscher eine äußere Austauschfläche derart angeordnet aufweist, dass im Wesentlichen der gesamte zerstäubte Strahl des Kühlmittels abgehalten werden kann, und eine Innenfläche, welche einen Flüssigkeitskreislauf begrenzt, so angeordnet wird, dass ein wirksamer Wärmeaustausch zwischen der Flüssigkeit und im Wesentlichen dem gesamten Umfang der äußeren Austauschfläche erzielt werden kann, und
Verdampfen des Nebels des unterkühlten Kühlmittels, welches in die Verdampfungskammer eingeführt wird, ohne Ansammlung von festen Teilen des Kühlmittels auf der äußeren Austauschfläche während der Einführung des Kühlmittels in die Verdampfungskammer.

17. Verfahren gemäß Anspruch 16, wobei im Wesentlichen das gesamte Kühlmittel in dem Maße verdampft, wie das Kühlmittel in die Verdampfungskammer eingeführt wird.

18. Verfahren gemäß Anspruch 16 oder 17, wobei der Wärmetauscher die Flüssigkeitstemperatur im Wärmetauscher unter den Tripelpunkt des Kühlmittels senkt.

## Claims

1. Refrigeration system (1) comprising:
an evaporation chamber (2, 102),
a refrigerant,
an injection device (14, 114) for introducing the refrigerant, in liquid phase in the form of an atomized jet (20, 120), into the said evaporation chamber,
an adsorption device (3), linked to the evaporation chamber and comprising an adsorbent (7) capable of adsorbing the refrigerant in vapour phase,
a heat exchanger (13, 113) placed in the evaporation chamber to effect an exchange of heat between the refrigerant in the evaporation chamber and a fluid in the heat exchanger,
**characterized in that** the said adsorption device is able to generate a depression in the evaporation chamber so as to lower the temperature of the refrigerant in the evaporation chamber to below the triple point of the refrigerant, the injection device being able to generate the atomized jet in the said evaporation chamber in the form of a mist made up of supercooled liquid droplets, and **in that** the heat exchanger comprises an exterior exchange surface (30, 31; 130, 131) placed in such a way as to intercept substantially all of the atomized jet of supercooled refrigerant, and an interior surface delimiting a fluid circuit (33, 133) arranged in such a way as to effect an effective exchange of heat between the fluid and substantially the entire extent of the exterior exchange surface, so that the mist of supercooled refrigerant can be evaporated without a solid fraction of the refrigerant building up on the said exterior exchange surface as the refrigerant is introduced into the evaporation chamber.

2. System according to Claim 1, in which the exterior exchange surface is positioned perpendicular to the atomized liquid jet or at a very small angle of incidence.

3. System according to Claim 1 or 2, in which the exterior exchange surface extends vertically.

4. System according to one of Claims 1 to 3, in which the fluid circuit of the heat exchanger comprises a plurality of parallel ducts (33) or pipes (40) positioned side by side along the exchange surface.

5. System according to one of Claims 1 to 4, in which the exterior exchange surface is continuous or substantially continuous.

6. System according to one of Claims 1 to 5, in which the heat exchanger comprises a profiled unit body (28, 128) having a plurality of parallel internal channels.

7. System according to one of Claims 1 to 6, in which the said or each exterior exchange surface has a surface finish that improves the wettability of the said surface.

8. System according to one of Claims 1 to 7, in which the heat exchanger has two exterior exchange surfaces positioned one on each side of the fluid circuit, and the injection device has at least two injectors (14) positioned in such a way that each of the said exterior exchange surfaces intercepts at least one atomized jet (20, 120) of refrigerant.

9. System according to one of Claims 1 to 8, in which the heat exchanger (113) has the form of a tubular wrapper open at both ends and has an exterior exchange surface (131) situated inside the tube.

10. System according to one of Claims 1 to 9, further comprising flow control means (12, 5) to control at least one flow selected from the group consisting of the flow of refrigerant introduced into the evaporation chamber, the flow of refrigerant adsorbed by the adsorption device, and the flow of fluid circulating in the heat exchanger.

11. System according to one of Claims 1 to 10, in which the adsorbent (7) contains a zeolite.

12. System according to one of Claims 1 to 11, in which the refrigerant contains water.

13. System according to one of Claims 1 to 12, in which the injection device (14) is able to atomize the refrigerant into particles of a diameter smaller than 100 microns, preferably into particles measuring around 10 microns.

14. System according to one of Claims 1 to 13, further comprising a collection device (50) arranged underneath the heat exchanger and able to collect bits of solid phase of refrigerant falling from the heat exchanger.

15. System according to Claim 14, in which the collection device (50) comprises a second heat exchanger (58).

16. Refrigeration method comprising the steps involving:
introducing a refrigerant in liquid phase in the form of an atomized jet into an evaporation chamber,
lowering the temperature of the refrigerant in the said evaporation chamber to below the triple point of the refrigerant so that the refrigerant remains in the liquid phase in the form of a mist made up of supercooled liquid droplets by placing the said evaporation chamber in communication with an adsorbent capable of adsorbing the refrigerant in the vapour phase,
effecting an exchange of heat between the mist of supercooled refrigerant in the said evaporation chamber and a fluid in a heat exchanger positioned in the evaporation chamber,
the heat exchanger comprising an exterior exchange surface positioned in such a way as to intercept substantially the entire atomized jet of refrigerant and an interior surface delimiting a fluid circuit arranged in such a way as to effect an effective exchange of heat between the fluid and substantially the entire extent of the exterior exchange surface, and
evaporating the mist of supercooled refrigerant introduced into the evaporation chamber without a solid fraction of the refrigerant building up on the said exterior exchange surface as the refrigerant is introduced into the evaporation chamber.

17. Method according to Claim 16, in which substantially all of the refrigerant is evaporated as the refrigerant is introduced into the evaporation chamber.

18. Method according to Claim 16 or 17, in which the exchange of heat lowers the temperature of the fluid in the heat exchanger to below the said triple point of the refrigerant.
